# EUROPEAN PATENT SPECIFICATION

(11) **EP 3 450 872 B1**
(45) Date of publication and mention of the grant of the patent: **17.08.2022**
(21) Application number: 17189045.2
(22) Date of filing: 01.09.2017
(51) Int. Cl.: F24F 13/20, F24F 12/00

(54) **AIR SUPPLY DEVICE**
LUFTZUFUHRVORRICHTUNG
DISPOSITIF D'ALIMENTATION EN AIR

(43) Date of publication of application: 06.03.2019
(73) Proprietor: Enervent Zehnder Oy, 06150 Porvoo (FI)
(72) Inventor: TUUTTI, Jari, 07500 Askola (FI); LALU, Tero, 06100 Porvoo (FI); PALMGREN, Tom, 06200 Porvoo (FI)
(74) Representative: Papula Oy

(56) References cited:
- EP-A1- 2 206 977
- WO-A1-01/71260
- CA-A1- 2 473 333
- US-A- 5 595 238
- US-B1- 6 196 469
- US-B1- 6 209 622

## Description

### TECHNICAL FIELD

The present invention relates to an air supply device for extracting exhaust air from a room and leading fresh supply air into the room, which device is arranged to be installed inside a cabin in a building.

### BACKGROUND

Air supply devices are separate devices which are installed inside a building. The known devices comprise an exhaust air channel and a supply air channel arranged inside a casing of the device to lead exhaust air and supply air through the device. The casing may further comprise a heat transfer unit within the exhaust air channel and the supply air channel. The heat transfer unit may comprise a rotating heat transfer element which is arranged to recover heat energy from a stream of air into another stream of air. Said rotating heat transfer element is arranged to rotate around vertical axis. This kind of device is described for example in patent publication US 2010/0170655. Bigger diameter of the rotating heat transfer element means that more heat energy is recovered from the airflow. Therefore, by arranging the rotating heat transfer element to rotate around vertical axis, the heat transfer unit, and therefore the air supply device, requires a lot of surface area on a floor. The required surface area on the floor determines possible locations where the air supply device is possible to be installed.

Other previously known solutions are disclosed for example in documents US 5595238 A and EP 2206977 A1, which teaches to use linear/straight air channels running through the device.

### OBJECTIVE

The objective of the invention is to alleviate the disadvantages mentioned above.

In particular, it is an objective to provide an air supply device which needs less surface area on a floor and is, therefore, possible to be installed for example inside a closet or cabinet in a building.

### SUMMARY

According to a first aspect, it is provided an air supply device according to claim 1.

In an embodiment of the device, the heat transfer unit comprises vertical dividing surfaces at both sides arranged to separate the supply air channel and the exhaust air channel around the heat transfer unit. Thereby the exhaust air flow and the supply air flow are not crossed.

In an embodiment of the device, the air supply device comprises at least one air fan arranged inside the exhaust air channel or the supply air channel.

In an embodiment of the device, the air supply device comprises two air fans so that an exhaust air fan is arranged inside the exhaust air channel for extracting the exhaust air from the room and a supply air fan is arranged inside the supply air channel for blowing the supply air into the room. These fans accelerate the air flows inside the exhaust air channel and the supply air channel and, therefore, the air inside the building is exchanged more efficiently.

In an embodiment of the device, the at least one air fan is arranged above the heat transfer unit. By arranging the fan or fans above the rotating heat transfer unit, even less floor space is needed for the air supply device.

In an embodiment of the device, the width of the air supply device is ≤ 590 mm. Typical cabinet width is 600 mm. To install the air supply device inside a typical cabinet easily, the width of the air supply device should be smaller than this.

In an embodiment of the device, the width of the air supply device is ≤ 540 mm.

In an embodiment of the device, the depth of the air supply device is ≤ 590 mm. Typical cabinet depth is 600 mm. To install the air supply device inside a typical cabinet, the depth of the air supply device should be smaller than this.

In an embodiment of the device, the depth of the air supply device is ≤ 555 mm

In an embodiment of the device, the depth of the air supply device is ≤ 552 mm.

In an embodiment of the device, the horizontal axis of the rotating heat transfer element is parallel to the width of the air supply device.

In an embodiment of the device, the air supply device is arranged to be installed into a cabinet.

In an embodiment of the device, the casing comprises at least two layers so that the outer layer is made of metal and inner layer is made of elastic material.

In an embodiment of the device, the elastic material is expanded polypropylene (EPP).

In an embodiment of the device, the elastic material is expanded polystyrene (EPS).

In an embodiment of the device, the air supply device comprises at least one air filter.

In an embodiment of the device, the at least one air filter is located next to the heat transfer unit.

It is to be understood that the aspects and embodiments of the invention described above may be used in any combination with each other.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** shows an exploded view of an air supply device, and
**Fig. 2** shows a cross sectional front view of the air supply device, and
**Fig. 3** shows the air supply device installed inside a standard cabinet.

### DETAILED DESCRIPTION

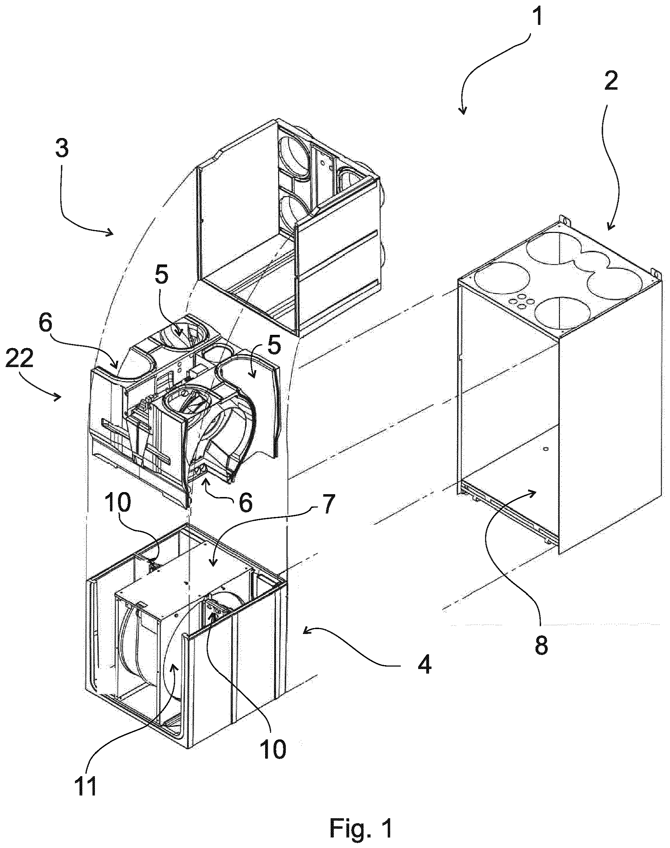

Figure 1 shows an air supply device 1 having components ready to be assembled together. The air supply device comprises a casing 2 further comprising a separate bottom sheet 8. Inside the casing 2, the air supply device 1 comprises a body which comprises two parts, an upper part 3 and a lower part 4 where the body and thus both of the upper part 3 and the lower part 4 are made of elastic material. The body further comprises an exhaust air channel 5 and a supply air channel 6. The exhaust air channel 5 is arranged to receive exhaust air into the air supply device and conduct the exhaust air out of the air supply device, and the supply air channel is arranged to receive fresh supply air into the air supply device and conduct the supply air further out of the air supply device. The exhaust air channel 5 and the supply air channel 6 run inside the air supply device 1 in parallel and forms a shape of U so that the each exhaust air channel 5 and the supply air channel 6 comprise two vertical portions and a horizontal portion between the vertical portions. The exhaust air and the supply air inside the respective channels flow in opposite directions.

According to one embodiment, the exhaust air and the supply air inside the respective channels flow in same direction.

The air supply device 1 comprises a heat transfer unit 7 within the exhaust air channel 5 and the supply air channel 6, which heat transfer unit 7 transfers thermal energy between the exhaust air and the supply air before the exhaust air and the supply air is blown out of the air supply device 1. The heat transfer unit comprises a rotating heat transfer element 11, which is arranged to rotate in vertical position around a horizontal axis. By arranging the rotating heat transfer element 11 to rotate in vertical position, the width of the air supply device 1 may be decreased without affecting to the efficiency of the air supply device (i.e. no need to decrease the cross-sectional area of the air channels). The rotating heat transfer element 11 is vertically divided for the exhaust air channel 5 and the supply air channel 6. The rotating heat transfer element 11 is arranged within the horizontal portions of the exhaust air channel 5 and the supply air channel 6.

According to one embodiment, the heat transfer unit 7 is located inside the lower part 4.

According to one embodiment, the horizontal axis of the rotating heat transfer element 11 is parallel to the width of the air supply device 1.

By arranging the rotating heat transfer element 11 to rotate in vertical position around the horizontal axis, which is parallel to the width of the air supply device, the diameter of the rotating heat transfer element 11 may be increased without widening the air supply device 1 itself.

The heat transfer unit comprises vertical dividing elements 10 on both sides. The vertical dividing elements 10 are arranged to separate the exhaust air channel 5 and the supply air channel 6 inside and around the heat transfer unit 7.

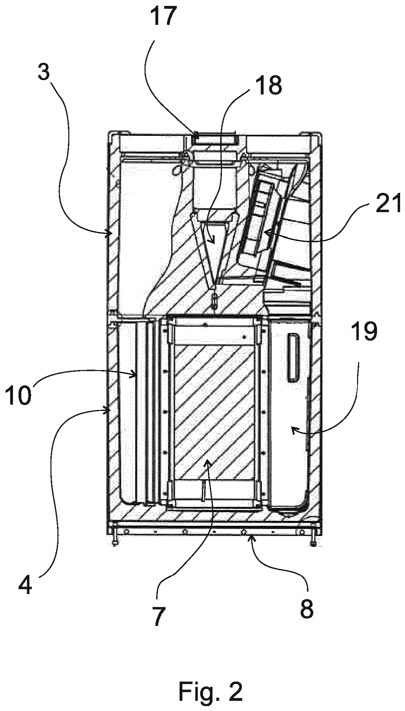

Figure 2 shows a cross sectional front view of the air supply device. The air supply device 1 may comprise at least one air filter 19 for removing impurities or some unwanted particles from the flowing air.

According to one embodiment, the air filter 19 is located inside the exhaust air channel 5 or inside the supply air channel 6.

According to one embodiment, both of the exhaust air channel 5 and the supply air channel 6 have an air filter 19 inside.

According to one embodiment, the air filter 19 or filters are arranged next to the heat transfer unit 7.

As illustrated in figure 2, the air supply device may comprise at least one fan 21 for boosting the air flow inside an air channel. The fan 21 may be an exhaust air fan inside the exhaust air channel for extracting the exhaust air from the room or a supply air fan inside the supply air channel for blowing the supply air into the room.

According to one embodiment, the air supply device 1 may comprise the exhaust air fan inside the exhaust air channel 5 and the supply air fan inside the supply air channel 6.

According to one embodiment, the fan 21 or fans are located above the heat transfer unit 7. By arranging the fan 21 or fans above the heat transfer unit, the width and/or depth of the air supply device is not increased.

Figure 2 shows also a cooker hood exhaust air channel 18, arranged inside the upper part 3, which connects the cooker hood air inlet 17 to the exhaust air channel 5. The cooker hood channel 18 is located inside the upper part 3 and above the heat transfer unit 7.

As illustrated in figure 1, the upper part 3 (with all the components inside) is installed on top of the lower part 4. Thereafter the body with the upper and lower part on top of each other is installed inside the casing 2 e.g. by sliding the body into the casing 2 through a front door opening of the casing 2. Alternatively the lower part 4 is slid into the casing 2 first and the upper part 3 is thereafter carefully slid onto the lower part 4. Thereafter the air supply device 1 is installed inside a cabinet 9 e.g. sliding the air supply device 1 into the cabinet 9.

A standard cabinet is 600 mm wide and 600 mm deep. Therefore, according to one embodiment, the width of the air supply device 1 is ≤ 590 mm. Thereby the air supply device is easy to install inside the cabinet 9.

According to one embodiment, the width of the air supply device 1 is ≤ 555 mm.

According to one embodiment, the width of the air supply device 1 is ≤ 540 mm

According to one embodiment, the depth of the air supply device 1 is ≤ 590 mm

According to one embodiment, the depth of the air supply device 1 is ≤ 555 mm.

According to one embodiment, the depth of the air supply device 1 is ≤ 552 mm.

According to one embodiment, the upper part 3 comprises a separate inner part 22, which is made of the same elastic material as the body. The inner part 22 forms the exhaust air channel 5 and the supply air channel 6 inside the upper part.

According to one embodiment, the elastic material is expanded polypropylene (EPP). EPP has good thermal insulation properties and its elasticity is suitable for squeezing parts made of EPP together. It is also light material and, therefore, the weight of the body parts is lower than in air supply devices with metal parts.

According to one embodiment, the elastic material is expanded polystyrene (EPS).

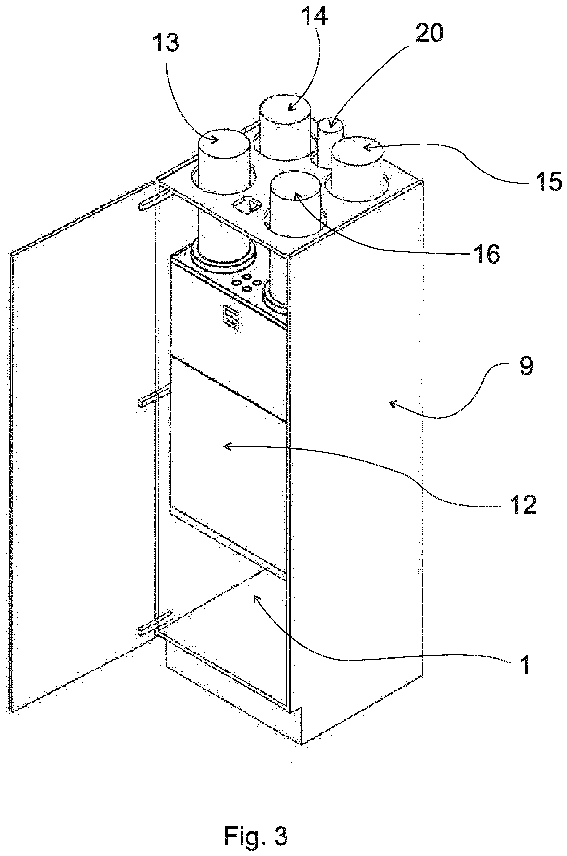

Figure 3 shows the air supply device 1 installed inside the cabinet 9 located in the building and the air supply device 1 is closed by a front door 12, which may be opened for maintenance. The building comprises an exhaust air duct 14 for conducting the exhaust air out of the air supply device and further out of the building, an extract air duct 15 conducting the exhaust air out of the room and into the air supply device 1, a fresh air duct 13 for conducting fresh supply air inside the air supply device 1, and a supply air duct 16 for conducting the supply air out of the air supply device 1 and into the room. The exhaust air duct 14 and the extract air duct 15 are connected to the exhaust air channel 5. The fresh air duct 13 and the supply air duct 16 are connected to the supply air channel 6. The order of the ducts may differ in buildings.

According to one embodiment, the cooker hood channel 18 is connected to a cooker hood duct 20 of the building via the cooker hood inlet 17.

According to one embodiment, the exhaust air channel 5 and the supply air channel 6 are connected to the ducts of the building trough one of the walls of the cabinet.

According to one embodiment, the exhaust air channel 5 and the supply air channel 6 are connected to the ducts of the building trough a ceiling of the cabinet.

## Claims

1. An air supply device for extracting exhaust air from a room and leading fresh supply air into the room comprising
- a casing (2), forming an outer layer of the air supply device (1),
- an exhaust air channel (5) arranged inside the casing (2) for extracting the exhaust air from the room,
- a supply air channel (6) arranged inside the casing (2) for leading the supply air into the room,
- a heat transfer unit (7) arranged within the exhaust air channel (5) and the supply air channel (6) to transfer thermal energy between exhaust air, flowing in the exhaust air channel, and supply air, flowing in the supply air channel, and
the heat transfer unit (7) comprises a rotating heat transfer element (11), which is rotatable around its horizontal axis, and which rotating heat transfer element (11) is vertically divided for separating the exhaust air channel (5) from the supply air channel (6),
**characterized in that**
- the exhaust air channel (5) and the supply air channel (6) run inside the air supply device in parallel and form a shape of U so that the exhaust air channel (5) and the supply air channel (6) comprise two vertical portions and a horizontal portion between the vertical portions, and
- the rotating heat transfer element (11) is arranged within the horizontal portions of the exhaust air channel (5) and the supply air channel (6).

2. An air supply device according to claim 1, **characterized in that** the heat transfer unit (7) comprises vertical dividing elements (10) at both sides arranged to separate supply air channel and exhaust air channel around the heat transfer unit (7).

3. An air supply device according to claim 1 or 2, **characterized in that** the air supply device (1) comprises at least one air fan (21) arranged inside the exhaust air channel (5) or the supply air channel (6).

4. An air supply device according to claim 3, **characterized in that** the air supply device (1) comprises two air fans (21) so that
- an exhaust air fan is arranged inside the exhaust air channel (5) for extracting the exhaust air from the room,
- a supply air fan is arranged inside the supply air channel (6) for blowing the supply air into the room.

5. An air supply device according to claims 3 or 4, **characterized in that** the at least one air fan (21) is arranged above the rotating heat transfer element (11).

6. An air supply device according to any of the preceding claims,
**characterized in that** the width of the air supply device (1) is ≤ 590 mm.

7. An air supply device according to any of the preceding claims,
**characterized in that** the depth of the air supply device (1) is ≤ 590 mm.

8. An air supply device according to any of the preceding claims,
**characterized in that** the horizontal axis of the rotating heat transfer element (11) is parallel to the width of the air supply device (1).

9. An air supply device according to any of the preceding claims,
**characterized in that** the air supply device (1) is arranged to be installed into a cabinet (9).

10. An air supply device according to any of the preceding claims,
**characterized in that** the casing (2) comprises at least two layers so that the outer layer is made of metal and inner layer is made of elastic material.

11. An air supply device according to claim 10, **characterized in that** the elastic material is expanded polypropylene (EPP).

12. An air supply device according to any of the preceding claims,
**characterized in that** the air supply device (1) comprises at least one air filter (19).

13. An air supply device according to claim 12,
**characterized in that** the at least one air filter (19) is located next to the heat transfer unit (7) .

## Patentansprüche

1. Luftzufuhrvorrichtung zum Ausleiten von Abluft aus einem Raum und zum Leiten von frischer Zuluft in den Raum, umfassend:
- ein Gehäuse (2), das eine äußere Schicht der Luftzufuhrvorrichtung (1) bildet,
- einen Abluftkanal (5), der im Inneren des Gehäuses (2) angeordnet ist, um Abluft aus dem Raum auszuleiten,
- einen Zuluftkanal (6), der im Inneren des Gehäuses (2) angeordnet ist, um die Zuluft in den Raum zu leiten,
- eine Wärmeübertragungseinheit (7), die innerhalb des Abluftkanals (5) und des Zuluftkanals (6) angeordnet ist, um Wärmeenergie zwischen der Abluft, die in dem Abluftkanal strömt, und der Zuluft, die in dem Zuluftkanal strömt, zu übertragen, und
wobei die Wärmeübertragungseinheit (7) ein rotierendes Wärmeübertragungselement (11) umfasst, das um seine horizontale Achse drehbar ist, und wobei das rotierende Wärmeübertragungselement (11) vertikal unterteilt ist, um den Abluftkanal (5) von dem Zuluftkanal (6) zu trennen,
**dadurch gekennzeichnet, dass**
- der Abluftkanal (5) und der Zuluftkanal (6) im Inneren der Luftzufuhrvorrichtung parallel verlaufen und eine U-Form bilden, derart, dass der Abluftkanal (5) und der Zuluftkanal (6) zwei vertikale Abschnitte und einen horizontalen Abschnitt zwischen den vertikalen Abschnitten umfassen, und
- das rotierende Wärmeübertragungselement (11) innerhalb der horizontalen Abschnitte des Abluftkanals (5) und des Zuluftkanals (6) angeordnet ist.

2. Luftzufuhrvorrichtung nach Anspruch 1,
**dadurch gekennzeichnet, dass** die Wärmeübertragungseinheit (7) auf beiden Seiten vertikale Unterteilungselemente (10) umfasst, die angeordnet sind, um Zuluftkanal und Abluftkanal um die Wärmeübertragungseinheit (7) herum zu trennen.

3. Luftzufuhrvorrichtung nach Anspruch 1 oder 2,
**dadurch gekennzeichnet, dass** die Luftzufuhrvorrichtung (1) mindestens einen Lüfter (21) umfasst, der im Inneren des Abluftkanals (5) oder des Zuluftkanals (6) angeordnet ist.

4. Luftzufuhrvorrichtung nach Anspruch 3,
**dadurch gekennzeichnet, dass** die Luftzufuhrvorrichtung (1) zwei Lüfter (21) umfasst, derart, dass
- ein Abluftlüfter im Inneren des Abluftkanals (5) angeordnet ist, um die Abluft aus dem Raum auszuleiten,
- ein Zuluftlüfter im Inneren des Zuluftkanals (6) angeordnet ist, um die Zuluft in den Raum zu blasen.

5. Luftzufuhrvorrichtung nach Anspruch 3 oder 4,
**dadurch gekennzeichnet, dass** der mindestens eine Lüfter (21) oberhalb des rotierenden Wärmeübertragungselements (11) angeordnet ist.

6. Luftzufuhrvorrichtung nach einem der vorhergehenden Ansprüche,
**dadurch gekennzeichnet, dass** die Breite der Luftzufuhrvorrichtung (1) ≤ 590 mm ist.

7. Luftzufuhrvorrichtung nach einem der vorhergehenden Ansprüche,
**dadurch gekennzeichnet, dass** die Tiefe der Luftzufuhrvorrichtung (1) ≤ 590 mm ist.

8. Luftzufuhrvorrichtung nach einem der vorhergehenden Ansprüche,
**dadurch gekennzeichnet, dass** die horizontale Achse des rotierenden Wärmeübertragungselements (11) zur Breite der Luftzufuhrvorrichtung (1) parallel ist.

9. Luftzufuhrvorrichtung nach einem der vorhergehenden Ansprüche,
**dadurch gekennzeichnet, dass** die Luftzufuhrvorrichtung (1) ausgelegt ist, in einem Schrank (9) installiert zu sein.

10. Luftzufuhrvorrichtung nach einem der vorhergehenden Ansprüche,
**dadurch gekennzeichnet, dass** das Gehäuse (2) mindestens zwei Schichten umfasst, derart, dass die äußere Schicht aus Metall hergestellt ist und die innere Schicht aus elastischem Material hergestellt ist.

11. Luftzufuhrvorrichtung nach Anspruch 10,
**dadurch gekennzeichnet, dass** das elastische Material expandiertes Polypropylen (EPP) ist.

12. Luftzufuhrvorrichtung nach einem der vorhergehenden Ansprüche,
**dadurch gekennzeichnet, dass** die Luftzufuhrvorrichtung (1) mindestens einen Luftfilter (19) umfasst.

13. Luftzufuhrvorrichtung nach Anspruch 12,
**dadurch gekennzeichnet, dass** der mindestens eine Luftfilter (19) neben der Wärmeübertragungseinheit (7) angeordnet ist.

## Revendications

1. Dispositif d'alimentation en air, destiné à extraire l'air d'évacuation d'une pièce, et à amener l'air d'alimentation frais dans la pièce, comprenant
- une enveloppe (2), qui forme une couche extérieure du dispositif d'alimentation en air (1),
- un canal d'air d'évacuation (5), agencé à l'intérieur de l'enveloppe (2), destiné à extraire l'air d'évacuation de la pièce,
- un canal d'air d'alimentation (6), agencé à l'intérieur de l'enveloppe (2), destiné à amener l'air d'alimentation dans la pièce,
- une unité de transfert de la chaleur (7), agencée à l'intérieur du canal d'air d'évacuation (5) et du canal d'air d'alimentation (6), destinée à transférer l'énergie thermique entre l'air d'évacuation qui circule dans le canal d'air d'évacuation, et l'air d'alimentation qui circule dans le canal d'air d'alimentation, et
- l'unité de transfert de la chaleur (7) comprend un élément de transfert de la chaleur rotatif (11), qui peut tourner autour de son axe horizontal, lequel élément de transfert de la chaleur rotatif (11) est divisé verticalement afin de séparer le canal d'air d'évacuation (5) du canal d'air d'alimentation (6),
**caractérisé en ce que**
- le canal d'air d'évacuation (5) et le canal d'air d'alimentation (6) passent en parallèle à l'intérieur du dispositif d'air, et constituent une forme en U, de telle sorte que le canal d'air d'évacuation (5) et le canal d'air d'alimentation (6) comprennent deux parties verticales et une partie horizontale entre les parties verticales, et
- l'élément de transfert de la chaleur rotatif (11) est agencé à l'intérieur des parties horizontales du canal d'air d'évacuation (5) et du canal d'air d'alimentation (6).

2. Dispositif d'alimentation en air selon la revendication 1,
**caractérisé en ce que** l'unité de transfert de la chaleur (7) comprend des éléments de division verticaux (10) au niveau des deux côtés, agencés afin de séparer le canal d'air d'alimentation et le canal d'air d'évacuation autour de l'unité de transfert de la chaleur (7).

3. Dispositif d'alimentation en air selon la revendication 1 ou 2,
**caractérisé en ce que** le dispositif d'alimentation en air (1) comprend au moins une soufflante d'air (21) agencée à l'intérieur du canal d'air d'évacuation (5) ou du canal d'air d'alimentation (6).

4. Dispositif d'alimentation en air selon la revendication 3,
**caractérisé en ce que** le dispositif d'alimentation en air (1) comprend deux soufflantes d'air (21) de telle sorte que
- une soufflante d'air d'évacuation soit agencée à l'intérieur du canal d'air d'évacuation (5) afin d'extraire l'air d'évacuation de la pièce,
- une soufflante d'air d'alimentation soit agencée à l'intérieur du canal d'air d'alimentation (6) afin de souffler l'air d'alimentation dans la pièce.

5. Dispositif d'alimentation en air selon la revendication 3 ou 4,
**caractérisé en ce que** l'une au moins des soufflantes d'air (21) est agencée au-dessus de l'élément de transfert de la chaleur rotatif (11).

6. Dispositif d'alimentation en air selon l'une quelconque des revendications précédentes,
**caractérisé en ce que** la largeur du dispositif d'alimentation en air (1) est inférieure ou égale à 590 mm.

7. Dispositif d'alimentation en air selon l'une quelconque des revendications précédentes,
**Caractérisé en ce que** la profondeur du dispositif d'alimentation en air (1) est inférieure ou égale à 590 mm.

8. Dispositif d'alimentation en air selon l'une quelconque des revendications précédentes,
**caractérisé en ce que** l'axe horizontal de l'élément de transfert de la chaleur rotatif (11), est parallèle à la largeur du dispositif d'alimentation en air (1).

9. Dispositif d'alimentation en air selon l'une quelconque des revendications précédentes,
**caractérisé en ce que** le dispositif d'alimentation en air (1) est agencé afin d'être installé dans une armoire (9).

10. Dispositif d'alimentation en air selon l'une quelconque des revendications précédentes,
**caractérisé en ce que** l'enveloppe (2) comprend au moins deux couches, de telle sorte que la couche extérieure soit réalisée en métal, et que la couche intérieure soit réalisée dans un matériau élastique.

11. Dispositif d'alimentation en air selon la revendication 10,
**caractérisé en ce que** le matériau élastique est un polypropylène expansé (EPP).

12. Dispositif d'alimentation en air selon l'une quelconque des revendications précédentes,
**caractérisé en ce que** le dispositif d'alimentation en air (1) comprend au moins un filtre à air (19).

13. Dispositif d'alimentation en air selon la revendication 12,
**caractérisé en ce que** l'un au moins des filtres à air (19) se situe à proximité de l'unité de transfert de la chaleur (7).
